(19) Europäisches Patentamt
European Patent Office
Office européen des brevets

(11) **EP 3 021 783 B1**

(12) **EUROPÄISCHE PATENTSCHRIFT**

(45) Veröffentlichungstag und Bekanntmachung des Hinweises auf die Patenterteilung:
**16.01.2019   Patentblatt 2019/03**

(51) Int Cl.:
**A61C 8/00** *(2006.01)*

(21) Anmeldenummer: **14761561.1**

(22) Anmeldetag: **16.07.2014**

(86) Internationale Anmeldenummer:
**PCT/DE2014/000357**

(87) Internationale Veröffentlichungsnummer:
**WO 2015/007262 (22.01.2015 Gazette 2015/03)**

(54) **SUPRASTRUKTURTRÄGER UND EIN VERFAHREN ZU SEINER HERSTELLUNG**

SUPERSTRUCTURE SUPPORT AND A METHOD FOR PRODUCING SAME

SUPPORT DE SUPERSTRUCTURE ET UN PROCÉDÉ POUR LE FABRIQUER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2013   DE 102013011870
14.08.2013   DE 102013013565**

(43) Veröffentlichungstag der Anmeldung:
**25.05.2016   Patentblatt 2016/21**

(73) Patentinhaber: **Spindler, Bruno
77728 Oppenau (DE)**

(72) Erfinder:
• **SPINDLER, Bruno
77728 Oppenau (DE)**

• **GADAU, Curd
63856 Bessenbach (DE)**

(74) Vertreter: **Thämer, Wolfgang
Zürn & Thämer
Patentanwälte
Hermann-Köhl-Weg 8
76571 Gaggenau (DE)**

(56) Entgegenhaltungen:
| EP-A1- 2 228 032 | WO-A1-2013/004387 |
| WO-A2-2011/062976 | DE-U1-202012 102 746 |
| KR-A- 20100 090 564 | US-A1- 2002 168 613 |
| US-A1- 2009 155 742 | US-A1- 2010 330 531 |
| US-A1- 2011 200 969 | US-A1- 2012 301 849 |

EP 3 021 783 B1

**Beschreibung**

Die Erfindung betrifft einen Suprastrukturträger, der in einem prothetischen Zahnersatzes zwischen einem eine Mittellinie aufweisenden Implantatkörper und einer Suprakonstruktion angeordnet ist und auf dem eine künstliche Krone oder ein Verbund aus einem Klebekörper und einer Krone angeordnet ist.

In der zahnärztlichen Implantologie wird u.a. im Rahmen der Herstellung eines prothetischen Einzelzahnersatzes häufig ein enossaler Implantatkörper verwendet, der die Prothese trägt.

In diesem Fall wird der Implantatkörper, eine Art Schraubdübel, in einer künstlich im Patientenkiefer erzeugten Bohrung eingeschraubt. Der eingeschraubte Implantatkörper nimmt bei der fertigen Prothese einen Implantatpfosten auf. Letzterer wird beispielsweise verdrehsicher im Implantatkörper mit einer speziellen Schraube verschraubt. Auf den Implantatpfosten wird direkt oder indirekt eine, die sichtbare Zahnkrone bildende Suprastruktur, z.B. durch Verkleben, aufgesetzt.

Die DE 20 2012 102 746 U1 beschreibt ein Zahnimplantataufbausystem, das aus einem Implantatkörper, einem Abutment, einem Kronenklebekörper und einer künstlichen Krone besteht. Das Abutment sitzt über einen Verdrehsicherungsabschnitt, zum Beispiel einem Sechskantabschnitt im Implantatkörper. Dem Kronenklebekörper zugewandt weist das Abutment einen Versetzungsabschnitt auf.

Aus der EP 2 228 032 A1 ist ein Abutment bekannt, dessen Körper ein rotationssymmetrisches Bauteil ist. Der untere Bereich des Abutments, der dem Zahnfleisch zugewandt ist, besitzt eine Oberflächenstruktur, die aus einer Vielzahl nebeneinanderliegender kreisrunder Rillen besteht.

Die US 2002/016813 A1 beschreibt einen künstlichen Zahnersatz mit einem hohlen Kern. Der hohle Kern kann auf seiner Außenwandung, die zur Krone hin orientiert ist, eine Vielzahl von Rillen aufweisen. Die Rillen sollen die Festigkeit der Verbindung zwischen Kern und Krone verbessern.

Der vorliegenden Erfindung liegt die Problemstellung zugrunde, einen Suprastrukturträger und dessen Herstellungsverfahren für den prothetischen Zahnersatz so zu verbessern, dass bei effektiver Fertigung zum einen ein sicheres Tragen der Suprastruktur und zum anderen ein sicheres Anhaften des Zahnersatzes an das Zahnfleisch gewährleistet ist.

Diese Problemstellung wird mit den Merkmalen des Patentanspruchs 1 gelöst. Dazu ist am Suprastrukturträger in dem dem Implantatkörper zugewandten Bereich eine Struktur angeordnet. Der dem Implantatkörper zugewandte Bereich weist einen Implantatteller auf, der zumindest bereichsweise die Form des Mantels eines Kegelstumpfes hat und aus mehreren auseinander hervorgehenden Kegelkoni besteht, von denen jeder gegenüber der Mittellinie einen anderen Winkel einschließt.

Mit dem Verfahrensanspruch 6 zur Herstellung eines Suprastrukturträgers nach Anspruch 1 wird das Problem gelöst, den Suprastrukturträger, der in einem prothetischen Zahnersatzes angeordnet ist, wirtschaftlich zu fertigen. Der Suprastrukturträger ist zwischen einem Implantatkörper und einer Suprastruktur angeordnet, wobei der Suprastrukturträger in einem klebekörper- und/oder kronentragenden Bereich einen Implantatpfosten und in dem dem Zahnfleisch und dem Implantatkörper zugewandten Bereich mindestens einen Implantathals aufweist. Der Suprastrukturträger wird aus einem Rohling gefertigt, der mittels eines Pulverspritzgießverfahrens hergestellt wird. Der Rohling erhält im klebekörper- und/oder kronentragenden Bereich durch die Spritzgießform eine der Fertigform mathematisch ähnliche Form. Der Rohling erhält in dem dem Zahnfleisch und dem Implantatkörper zugewandten Bereich durch die Spritzgießform die Form eines Rohzapfens. Der Rohzapfen erhält durch spanabhebende und/oder umformende oder durch mechanisch und optisch trennende Bearbeitung seine Fertigform, wobei ein dem Zahnfleisch zugewandter Implantatteller entsteht, in dessen dem Zahnfleisch zugewandten Fläche zumindest bereichsweise eine Struktur eingearbeitet wird.

Beim Pulverspritzgießen wird ein mit einem thermoplastischen Binder versetztes Metall- oder Keramikpulver unter Druck in eine beheizte Spritzgießform gespritzt. Nach dem Entformen wird der Binder des Rohlings durch Backen oder durch ein chemisches Herauslösen zumindest weitgehend entfernt. Abschließend wird der entbinderte Rohling in einem Ofen solange gesintert, bis er die erforderliche Materialdichte aufweist. Bei diesem Vorgang schwinden die vorzuhaltenden Geometriedaten nahezu proportional um 5 bis 35 Prozent. Als Metallpulver wird hier beispielsweise die Titanlegierung Ti6Al4V verwendet, bei der das Schwundmaß bei 7 bis 12 Prozent liegt.

Selbstverständlich kann der Rohling auch in einem zur Verarbeitung von Metall- oder Keramikpulver geeigneten 3D-Drucker erzeugt werden. Auch eine Fertigung in einer Gesenk- oder Funkenerodiermaschine ist denkbar.

Weitere Einzelheiten der Erfindung ergeben sich aus den Unteransprüchen und der nachfolgenden Beschreibung schematisch dargestellter Ausführungsformen.

Figur 1: Explosionsmodell eines prothetischen Zahnersatzes;

Figur 2: Längsschnitt durch einen prothetischen Zahnersatz;

Figur 3: Suprastrukturträger mit pfostenseitiger Struktur, (Stand der Technik);

Figur 4: Suprastrukturträger mit halsseitiger Struktur;

Figur 5: Rohling eines Suprastrukturträgers;

Figur 6: Längsschnitt zu Figur 5 mit Teilen der Spritzgießform.

Figur 7: Draufsicht auf die Struktur mit sphärischen

Figur 8:     Schnitt durch die Struktur nach Figur 7 mit Fräskopf (gestrichelt) und Fräserbahn;

Figur 9:     Draufsicht auf die Struktur mit ellipsoidalen Vertiefungen am Implantatpfosten;

Figur 10:    Schnitt durch die Struktur nach Figur 9 mit Fräskopf (gestrichelt) und Fräserbahn;

Figur 11:    Querschnitt durch die rillenartige Struktur der Unterseite des Implantattellers mit Rollwerkzeug;

Figur 12:    Querschnitt durch die rillenartige Struktur der Unterseite des Implantattellers mit einem gegenüber Figur 11 verschmälerten Rollwerkzeug;

Figur 13:    Rollwerkzeug nach Figur 11 mit einem Querschnitt durch die rillenartige Struktur nach Figur 11.

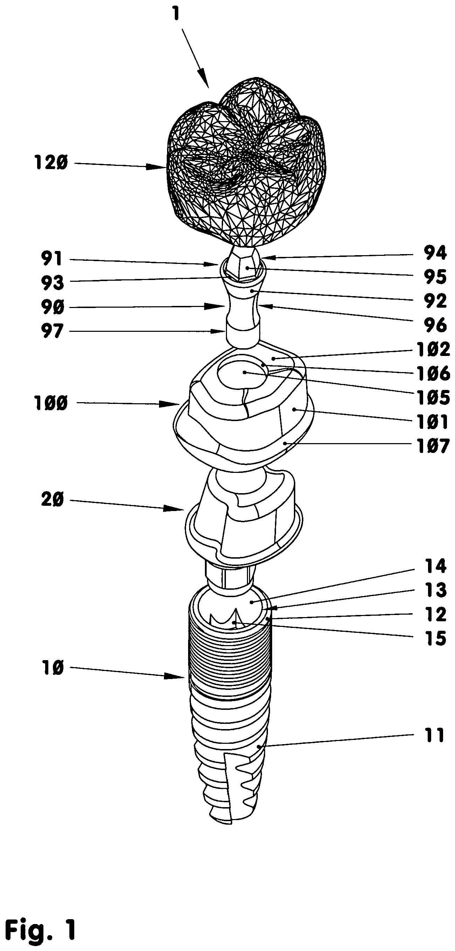

Die Figur 1 zeigt beispielhaft alle Teile eines künstlichen Zahnes (1) in Form einer Explosionszeichnung. Als Basis dient ein hohlschraubenartiger Implantatkörper (10). Mit ihm wird ein Suprastrukturträger (20) in Kombination mit einem z.B. aufgeklebten Klebekörper (100) mittels einer Außensechskantschraube (90) verdrehsicher verschraubt. Auf den Klebekörper (100) wird in der Regel eine künstliche Zahnkrone (120) aufgesetzt und verklebt.

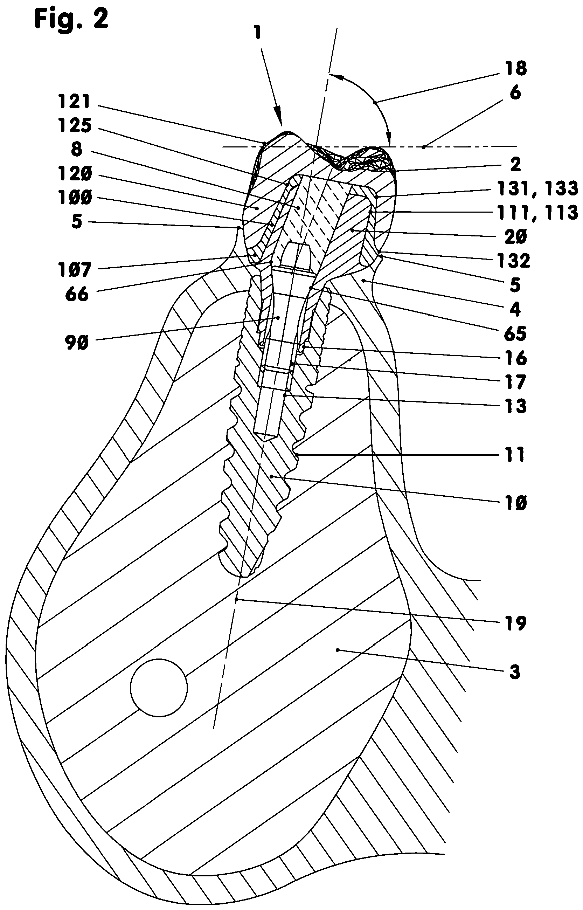

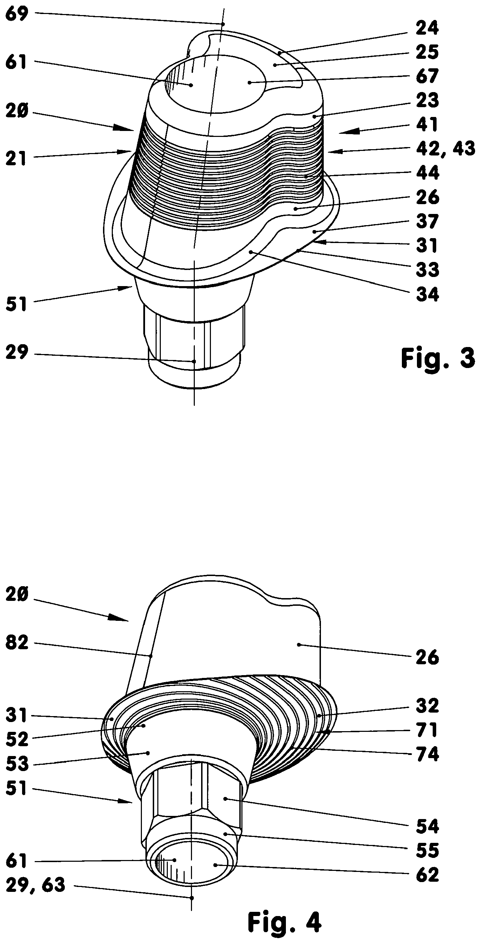

Die Figur 2 zeigt den prothetischen Zahnersatz (1), der auf einem im Kieferknochen (3) eingeschraubten Implantatkörper (10) aufgebaut ist. Der gezeigte Kieferknochenschnitt liegt - vom Patient aus betrachtet - im Bereich der Backenzähne der rechten Kieferseite. Der Schnitt ist senkrecht zur Kauebene (6) orientiert. Im Implantatkörper (10), dessen Mittellinie (19) gegenüber der Kauebene (6) um einen Winkel (18) von z.B. 80 Winkelgraden geneigt ist, sitzt in einem Konussitz (14) ein z.B. abgewinkelter Suprastrukturträger (20), vgl. Figuren 3 und 4. Der Suprastrukturträger (20) wird mit Hilfe einer speziellen Außensechskantschraube (90) in der Ausnehmung (13) des Implantatkörpers (10) gehalten. Auf dem auf dem Suprastrukturträger (20) befestigten Klebekörper (100) ist als weiteres Suprastrukturteil eine künstliche Zahnkrone (120) aufgeklebt.

Der Implantatkörper (10) ist nach den Figuren 1 und 2 eine Hohlschraube mit einem selbstschneidenden, z.B. nichtmetrischen Außengewinde. Circa in der oberen Hälfte weist der Implantatkörper (10) die mehrstufige Ausnehmung (13) auf, die in drei Zonen aufgeteilt ist. Die erste Zone (14), sie liegt im Bereich der Implantatschulter (12) des Implantatkörpers (10), ist ein Innenkonus, der einen Kegelwinkel von z.B. 18 Winkelgraden aufweist, vgl. Figur 1. Der Innenkonus (14) geht in einen als Verdrehsicherung dienenden Innensechskant (15) der zweiten Zone über. An den Innensechskant (15), der z.B. auch ein Doppelinnensechskant oder eine andere form- oder kraftschlüssige Verdrehsicherungsgeometrie sein kann, schließt sich ein die Zentrierung des Suprastrukturträgers (20) im Implantatkörper (10) unterstützende Zylindersitz (16) an. Der z.B. nur 0,7 mm lange Zylindersitz (16) hat hier einen Durchmesser, der der Schlüsselweite des Innensechskants (15) entspricht.

Die dritte Zone (17) ist eine Gewindebohrung, die bei der Montage die den Suprastrukturträger (20) haltende Außensechskantschraube (90) aufnimmt.

Der Suprastrukturträger (20) hat primär die Aufgabe - im Implantatkörper (10) sitzend - als Basis für die künstliche Zahnkrone (120) zu dienen. Er hat einen Bereich (51), der dem Implantatkörper (10), vgl. Figur 3, und einen Bereich (21), der der Zahnkrone (120) bzw. der Suprastruktur zugewandt ist, vgl. Figur 4.

Der dem Implantatkörper (10) zugewandte Bereich (51) ist der Implantathals (52) mit seinem Außenkonus (53), seinem Außensechskant (54) und beispielsweise einem kurzen Zylinderansatz (55). Der Außenkonus (53), der Außensechskant (54) und der Zylinderansatz (55) sitzen passgenau in der Ausnehmung (13) des Implantatkörpers (10). In der zur Spitze des Implantatkörpers (10) weisenden axialen Richtung kontaktieren die Stirnflächen der Teile (54, 55) die Ausnehmung (13) nicht.

Oberhalb des Implantathalses (52) schließt sich ein Implantatteller (31) an, der z.B. mit einem stetigen Übergang aus dem Implantathals (52) hervorgeht, vgl. Figur 4. Der z.B. unrunde Implantatteller (31) hat zumindest bereichsweise die Form des Mantels eines Kegelstumpfes, dessen Konuswinkel sich zur Zahnkrone (120) hin öffnet. Der Konuswinkel liegt z.B. zwischen 125 und 131 Winkelgraden. Die Unterseite des Implantattellers (31) besteht auch aus mehreren auseinander hervorgehenden Kegelkoni, wobei jeder gegenüber der Mittellinie (29) einen anderen Winkel einschließt. In diesem Fall liegen die Koniwinkel zwischen 120 und 136 Winkelgraden.

Die dabei entstehenden Kanten zwischen zwei aneinandergrenzenden Kegelkoni können auch die Funktion einer Bakterienbarriere haben, sofern der jeweils von den aneinanderstoßenden Mantelflanken eingeschlossene Winkel - gemessen im Raum außerhalb des Implantattellers (31) - größer als 180 Winkelgrade ist.

Der äußere Rand (33) des Implantattellers (31) hat hier einen Abstand zur Mittellinie (29), der sich bei einer 360°-Rotation um die Mittellinie (29) zwischen 2,22 und 3,48 mm bereichsweise stetig ändert. Der Rand (33) erfährt hierbei in Längsrichtung der Mittellinie (29) einen Höhenversatz von z.B. 0,78 ± 0,2 mm.

Nach Figur 4 hat die Unterseite (32) des Implantattellers (31) eine Rillenstruktur (71). Die einzelnen Rillen (74) der Struktur (71) werden beispielsweise mittels eines Fräs- oder Schleifprozesses erzeugt. Hierbei kann z.B. der Mittelpunkt des Kopfes des Fräs- oder Schleifwerkzeuges, z.B. der kugelige Kopf eines zahnärztlichen Rosenbohrers, auf einer Ebene geführt werden, die normal zur Mittellinie (29) ausgerichtet ist. Jede vom Fräs- oder Schleifwerkzeug erzeugte Rille (74) oder Kerbe liegt auf einer geschlossenen Bahnkurve, die beispielsweise einen stetigen Verlauf aufweist.

Auch hier kann sich anstatt der Rillen (74) nur eine Rille oder Kerbe mit oder ohne Unterbrechungen nahezu spiral- und/oder wendelförmig entlang der Unterseite (32) des Implantattellers (31) winden.

Nach Figur 4 sind die Rillen (74) so beabstandet, dass zwischen ihnen Felder oder Stege stehenbleiben, die z.B. der Breite einer einzelnen oder mehrerer Rillen entsprechen. Ggf. können die Rillen (74) auch ohne Abstand nebeneinander liegen. In diesem Fall entsteht zwischen zwei Rillen eine kantige Erhebung. Quer zu ihrer Längsausdehnung hat die einzelne Rille einen kreisabschnittförmigen Querschnitt. Der Abstand zwischen zwei kantigen durch drei Rillen entstandenen Erhebungen entspricht dann der mathematischen Sehnenlänge s dieses kreisabschnittförmigen Querschnitts. Die Tiefe der Rille entspricht der mathematischen Bogenhöhe h. Die Beziehung der Bogenhöhe h und der Sehnenlänge s in Abhängigkeit des Fräserradius r beschreibt folgende Formel:

$$h = r - (r^2 - 0{,}25 * s^2)^{1/2}$$

Betrachtet man mehrere nebeneinanderliegende Rillen, deren kantige Erhebungen jeweils voneinander im Abstand s als sogenannte Teilung auseinanderliegen, bildet h die zwischen den Rillentälern und den kantigen Erhebungen (= Stege) gelegene Amplitude. Die Amplitude h und der Abstand s stellen die Makrostruktur der Oberfläche dar.

Bei einem Kugelkopffräser mit einem Radius von 0,5 mm errechnet sich bei einer Teilung von 100 $\mu$m eine Amplitude von circa 2,5 $\mu$m. Wird die Teilung bei unverändertem Radius verdoppelt, erhöht sich die Amplitude auf circa 21 $\mu$m.

An die Oberfläche der Unterseite werden zwei Forderungen gestellt. Zum einen soll die Oberfläche umlaufende, erhabene Stege oder Stollen oder in Oberfläche eingelassene Rillen oder Kerben aufweisen. Durch die Stege, Stollen, Rillen oder Kerben entstehen umlaufende, als Bakterienbarrieren dienende Kanten.

Der Abstand benachbarter Kanten (= kantige Erhebungen) liegt beispielsweise im Bereich von 0,1 bis 0,5 mm. Zum anderen soll die Oberfläche in sich nahezu spiegelglatt sein, um sowohl ein kurzzeitiges als auch ein dauerhaftes Anhaften von Bakterien schon aus physikalischen Gründen zu verhindern.

Dazu liegt der arithmetische Mittenrauhwert im Bereich der Unterseite (32) des Implantattellers (31) und am Implantathals (52) trotz der Mikrostruktur (71) in einem Bereich von nur 1,5 bis 3,0 $\mu$m. So hat die "wellige", mit Miniaturbarrieren versehene Unterseite (32) auf den "Wellenbergen" und in den "Wellentälern" eine nahezu porenfreie, geschlossene Oberfläche.

Neben der spanabhebenden Bearbeitung der unteren Seite des Implantattellers (31) und des Implantathalses (52) kann auch eine umformende Bearbeitung vorgesehen werden. Beispielsweise ist es möglich, die Rillen mit einem Rollwerkzeug in die Oberfläche zu drücken. Das sogenannte Rollieren stellt eine Feinbearbeitung dar, deren Rauhtiefen unter 1 $\mu$m liegen. Neben der gewünschten Glättung erfährt die Werkstückoberfläche zudem eine Verfestigung.

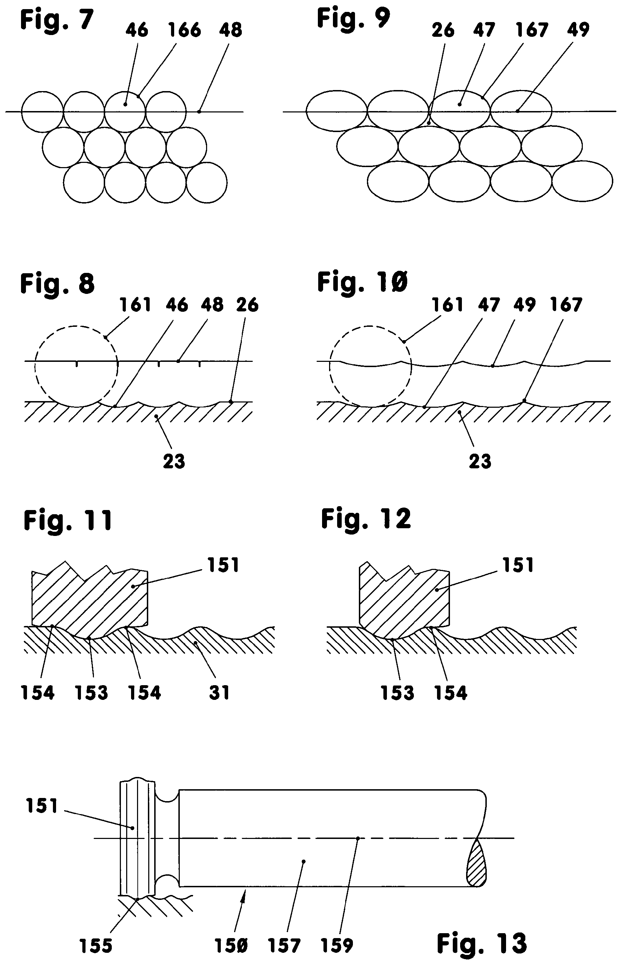

In den Figuren 11 und 13 ist ein Rollwerkzeug (150) dargestellt, das eine Profilierung hat, die sowohl die "Wellentäler" einprägt als auch die Wellenberge glättet. Dazu hat der Rollierkopf (151) des Rollwerkzeugs (150) einen Rillenprofilabschnitt (153), an den sich beidseitig ein Glättabschnitt (154) anschließt. Der Rillenprofilabschnitt (153) sorgt für die entsprechenden "Wellentäler". Die Glättabschnitte (154) verjüngen sich an ihren freien Rändern, um neue Walzkanten zu vermeiden. Im Bereich der Verjüngungen verringern sich die auf die Mittellinie (159) des Rollwerkzeugs bezogenen Radien mit zunehmendem Abstand von der Mitte des Rollierkopfes (151).

Figur 12 zeigt den Teilschnitt eines Rollierkopfes (151), der an seiner schaftfernen Seite keinen Glättabschnitt (154) aufweist.

Während des Rolliervorganges ist das Rollwerkzeug (150) so gegenüber dem Strukturträger ausgerichtet, dass der zwischen der Rollkontaktstelle (155) und der Mittellinie (159) gelegene Radiusstrahl normal auf der Hüllfläche der noch nicht rollierten Oberfläche der Unterseite (32) steht. Zugleich liegt die zur Mittellinie (159) normal orientierte Ebene, in der sich der Radiusstrahl befindet, tangential an der entsprechenden Bahnkurve des "Wellentals" an.

Anstelle eines rotierenden, sich auf dem Werkstück abrollenden Rollwerkzeugs kann auch ein Diamantglättwerkzeug benutzt werden. Hier wird ein z.B. halbkugeliger Diamant zum Rillen und Glätten entlang der oben genannten Bahnkurve gezogen.

Mit dem Rollwerkzeug (150) wird pro Umlauf jeweils nur eine Rille erzeugt. Selbstverständlich ist es auch möglich, mehrere Rollierköpfe (151) zu einem z.B. einteiligen Formwerkzeug zu vereinigen. Mit einem derartigen Formwerkzeug lassen sich dann in einem Umlauf alle Rillen gleichzeitig erzeugen. Da die einzelnen Rillen auf unterschiedlichen Radien liegen, ergibt sich zwangsläufig ein Schlupf, der zusätzlich eine glättende Wirkung zeigt. Die Möglichkeit, ein Formwerkzeug zu nutzen, kann auch auf die spanabhebende Bearbeitung übertragen werden. In diesem Fall bearbeitet ein Form- bzw. Profilfräser alle oder zumindest eine Gruppe aus mehreren Rillen bei nur einem Umlauf gleichzeitig.

Alternativ zu den beschriebenen umlaufenden Strukturen können auch stochastisch verteilte Dellen in die Unterseite (32) des Implantattellers (31) umformend eingearbeitet werden. Hierfür ist u.a. das Glanzstrahlen geeignet. Bei diesem Verfahren werden Glasperlen, die ein Durchmesser von 15 bis 50 $\mu$m aufweisen, mit Druckluft durch eine Düse hindurch auf das zu bearbeitende Objekt geschossen.

Oberhalb des Implantattellers (31) erstreckt sich im Bereich (21) der Implantatpfosten (23). Letzterer hat im z.B. ausgerundeten Übergangsbereich (34) zum Implantatteller (31) einen Querschnitt, der kleiner ist als der maximale Querschnitt des Implantattellers (31). Somit hat auch der Implantatteller (31) zum Implantatpfosten (23) hin eine flächige Randoberseite (37). In nahezu jeder durch die Mittellinie (29) gelegten Schnittebene ist die Kontur der flächigen Randoberseite zumindest bereichsweise senkrecht zur Mittellinie (29) orientiert. An der schmalsten Stelle ragt der Implantatteller (31) 0,4 bis 0,5 mm in Radialrichtung über. Die breiteste Stelle kann mehr als 2 mm messen. Die flächige Randoberseite (37) bildet u.a. eine Aussitzfläche für den Klebekörper (100) oder die Zahnkrone (120).

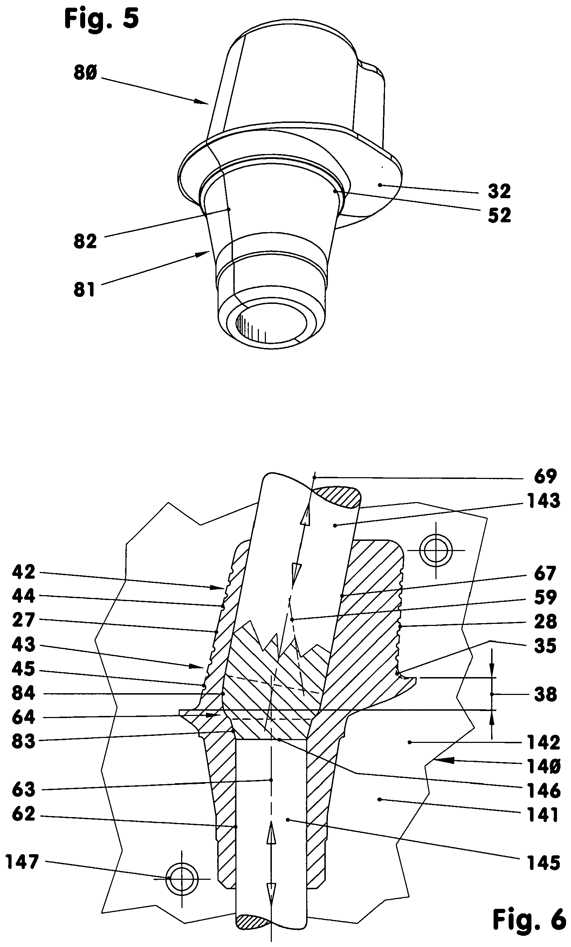

Der ausgerundete Übergangsbereich kann auch in axialer Richtung parallel zur Mittellinie (29) um 0,05 bis 0,2 mm vertieft werden, so dass zwischen der flächigen Randoberseite (37) und dem Implantatpfosten (23) eine Rinne (35) entsteht, vgl. Figur 6, gestrichelte Linie.

Der meist 3 bis 4 mm hohe Implantatpfosten (23) hat im Schnitt nach den Figuren 2 und 6 den Querschnitt eines Trapezes. Die linke Flankenlinie (27) ist gegenüber der Mittellinie (29) um z.B. 13,3 Winkelgrade oberhalb des Implantattellers (31) zur Mittellinie (29) hin geneigt. Die rechte Flankenlinie (28) schließt mit der Mittellinie (29) einen Winkel von z.B. 3,2 Winkelgraden ein, wobei die gedachte Verlängerung der rechten Flankenlinie (28) die Mittellinie (29) weit unterhalb des Implantattellers (31) schneidet.

Im oberen Bereich gehen die Flankenlinien (27, 28) nach Figur 6 in eine waagerechte Kontur über. Diese Kontur gehört zur Hauptauflagefläche (25), vgl. Figur 3, die idealerweise - zumindest bei einem vom Zahntechniker noch unbearbeiteten Suprastrukturträger (20) - senkrecht zur Mittellinie (29) ausgerichtet ist.

Quer zu dem in Figur 6 dargestellten Schnitt verjüngt sich der Implantatpfosten (23) nach oben hin. Seine dortigen Flankenlinien schließen mit der Mittellinie (29) in der Regel einen Winkel von 3 ± 0,5 Winkelgrade ein. Es gibt auch Implantatpfosten, deren Flankenlinien parallel zur Mittellinie (29) verlaufen.

Nach den Figuren 1 und 4 besteht der Implantatpfosten (23) in erster Näherung aus einem schrägen Kegelstumpf mit kreisrundem Grundquerschnitt und einem diesen bereichsweise durchdringenden schrägen Kegelstumpf mit elliptischem Querschnitt. Die Mittellinien der beiden Kegelstümpfe bilden eine Ebene, in der die kleinen Halbachsen des elliptischen Querschnitts liegen. Im Bereich der Durchdringung der beiden schrägen Kegelstümpfe befinden sich Ausrundungen, deren Radien zwischen 0,3 und 0,4 mm liegen.

Durch diese spezielle Form des Implantatpfostens (23) ergibt sich eine verdrehsichere Basis für den zu tragenden Klebekörper (100).

Die radiale Außenfläche (26) des Implantatpfostens (23) trägt nach Figur 3 eine Struktur, die beispielsweise aus einer Vielzahl von parallelen Rillen (44) besteht. Jede Rille liegt hier in einer Ebene, die normal zur Mittellinie (29) orientiert ist. Die oberste Rille ist von der Hauptauflagefläche (25) z.B. 0,5 mm entfernt. Die Struktur (41) erstreckt sich auf einer Höhe von z.B. 2,5 mm. Jede Rille (44) hat eine maximale Tiefe von 0,005 bis 0,025 mm. Die Tiefe ist hierbei der kürzeste Abstand zwischen einer den Implantatpfosten (23) umgebenden Hüllfläche und dem tiefsten Punkt der jeweiligen Rille. Die Hüllfläche ist die gedachte Fläche, die der theoretischen, radialen Außenfläche (26) entspricht, bevor die Rillen eingefräst sind.

Gemäß Figur 6 ist die Struktur in zwei einen Winkel einschließende Bereiche (42, 43) aufgeteilt. Der obere Bereich (42) zeigt Rillen, die auf dem Implantatpfosten (23) in einer zu Figur 3 vergleichbaren Weise angeordnet sind. Der untere Bereich stellt Rillen (44) dar, die in Ebenen liegen, deren Normalen gegenüber der Mittellinie (29) um 9 ± 1 Winkelgrade gekippt sind. Die Kippung ist so ausgelegt, dass die Rillen parallel oder nahezu parallel zur Randoberseite (37) des Implantattellers (31) orientiert sind. Selbstverständlich ist es auch möglich, die einzelnen Rillen (44) und/oder (45) aufgefächert auf dem Implantatpfosten (23) zu verteilen. In diesem Fall haben benachbarte Rillen entlang der rechten Flankenlinie (28), vgl. Figur 6, einen kleineren Abstand als entlang der linken Flankenlinie (27). Ferner ist es möglich, dass sich zumindest ein Teil der Rillen überkreuzt.

Alternativ kann statt vieler Rillen (44) nur eine Rille oder Kerbe verwendet werden, die sich mit oder ohne Unterbrechungen nahezu wendel- oder schraubenförmig entlang der radialen Außenwandung (26) des Implantatpfostens (23) windet. Die Rillen (44, 45) können auf die gleiche Weise erzeugt werden wie die Rillen (74), siehe oben.

Nach den Figuren 3 und 6 sind die Rillen (44, 45) so beabstandet, dass zwischen ihnen Felder oder Stege stehenbleiben, die z.B. der Breite der einzelnen Rille entsprechen. Ggf. können die Rillen (44, 45) auch ohne Abstand nebeneinander liegen.

Um beispielsweise eine Rille (74) oder Spur (48) zu erzeugen, deren Tiefe und/oder Breite zyklisch schwankt, wird z.B. ein Kugelkopffräser mit geringer Zähnezahl entlang der radialen Außenfläche (26) des Implantatpfostens (23) geführt. Die Mittellinie des Fräsers schließt dabei mit der Mittellinie (29) einen Winkel von 15 ± 20 Winkelgraden ein. Bei einem bestimmten Vorschub/Drehzahlverhältnis entsteht auf der Außenfläche (26) eine Struktur, die der Musterung eines Golfballs weitgehend entspricht, sofern der genannte Golfball mit den als "Dimples" bezeichneten Dellen versehen ist, vgl. Figur 7. Die Dellen sind, gemäß der Figuren 7 und 9, die Vertiefungen (46, 47), deren Ränder oder Kanten auf der Außenfläche (26) z.B. als geschlossene Kurven (166, 167) zu erkennen sind. Die geschlossenen Kurven (166) haben in der senkrechten Draufsicht nahezu die Form eines Kreises, während die geschlossenen Kurven (167) in der senkrechten Draufsicht nahezu Ellipsen sind.

Die Figuren 8 und 10 zeigen jeweils ein Beispiel, wie die Vertiefungen (46, 47) entstehen können. Vereinfachend wird hier die Außenfläche (26) als Ebene betrachtet. Entlang der Außenfläche (26) wird ein Fräser geführt, dessen Fräskopf (161) nach Figur 8 auf der Bahnkurve (48) geführt wird. Hier wird der Fräskopf (161) zunächst parallel entlang der einhüllenden Außenfläche (26) geführt. Die Bahnkurve (48) hat zur einhüllenden Außenfläche (26) z.B. einen Abstand, der dem Radius des Fräskopfes (161) entspricht. Sobald der Fräskopf (161) über der Mitte der zu fertigenden Vertiefung (46) steht, taucht der Fräskopf (161) spanabhebend in die Außenfläche (26) des Implantatpfostens (23) ein. Nach dem Erreichen der entsprechenden Tiefe fährt er um das Eintauchmaß zurück, um wieder parallel zur einhüllenden Außenfläche (26) und dann zur nächsten Frässtelle zu gelangen.

Nach Figur 10 bewegt sich der Fräskopf (161) auf einer wellenförmigen Bahnkurve (48), um die Vertiefungen (47) mit den nahezu elliptischen Rändern (167) zu erzeugen.

In beiden Fällen entsteht eine strukturierte Oberfläche, deren Vertiefungen z.B. auch eine Tiefe von 1 - 20 $\mu$m haben können. Die einzelne Vertiefung, die auch hier beispielsweise sphärisch, ellipsoidal oder langlochartig ausgeführt ist, hat einen Durchmesser oder eine Länge, die zwischen 1 und 1000 $\mu$m liegt. In einem nicht dargestellten Ausführungsbeispiel beträgt die Tiefe 2,5 $\mu$m bei einem Durchmesser von 100 $\mu$m.

Die Geometriewerte der mikroskopischen Struktur (41) sind u.a. eine Funktion der Korngröße der Partikel des Klebstoffes (113), der den Implantatpfosten (23) mit dem Klebekörper (100) verbindet. Liegt die Korngröße der Partikel bei 1 bis 20 $\mu$m und hat der Spalt der Klebefuge (111) eine Breite von 10 bis 35 $\mu$m, so entsteht trotz des klebetechnischen Stoffschlusses im Bereich der Struktur (41) eine Art Formschluss durch die in den Vertiefungen bzw. Rillen (44, 45) liegenden größeren Partikel des Klebstoffes (113).

Zusätzlich ist der Suprastrukturträger (20) zumindest oberhalb des Implantattellers (31) mit einer Titannitridbeschichtung ausgestattet. Ihre Schichtdicke beträgt z.B. 1 bis 4 $\mu$m. Alternativ können dort auch dünnwandige Keramik- oder Copolymerbeschichtungen aufgetragen sein.

Nach Figur 1 hat der Suprastrukturträger (20) eine durchgehende, Ausnehmung (61), die im mittleren Bereich eine Knickstelle mit einem Knickwinkel von 11 $\pm$ 4 Winkelgraden aufweist. Die fertig bearbeitete Ausnehmung (61) besteht aus drei Zonen. Die untere Zone (62) ist eine zylindrische Bohrung, deren Durchmesser z.B. 1,7 mm beträgt. Ihre Mittellinie (63) deckt sich mit der Mittellinie (29). Nach Figur 1 wird diese Zone (62) vom Schaft (96) der Außensechskantschraube (90) durchquert, wobei der Schaft (96) die Wandung der Zone (62) nicht kontaktiert.

Die obere Zone (67) ist ebenfalls eine zylindrische Bohrung. Ihre Mittellinie (69) schneidet die Mittellinie (29) in der mittleren Zone (64), hier unter einem Winkel von 11 Winkelgraden. Diese obere Zone (67) dient der Einführung der Außensechskantschraube (90) und der Führung des Werkzeuges, mit der die Außensechskantschraube (90) angezogen wird. Die mittlere Zone (64) stellt einen Übergangsbereich dar, der zum einen einen Innenkonus (65) und zum anderen einen Abwinkelungsbereich (66) aufweist, vgl. Figur 2. Der Innenkonus (65), der koaxial zur unteren Zone (62) angeordnet ist, dient als Auflagefläche für den Kopf (92) der Außensechskantschraube (90).

Der Abwinkelungsbereich (66) passt die zylindrische Bohrung (67) an der Abknickstelle an den großen Öffnungsquerschnitt des Innenkonus (65) an. Der Übergang erfolgt im Ausführungsbeispiel ohne Kanten, also tangential.

Die Figur 6 zeigt einen z.B. im Pulverspritzgießverfahren zu fertigenden Rohling (80) des Suprastrukturträgers (20) im Längsschnitt in seiner geöffneten Spritzgießform (140). Die Spritzgießform (140) besteht im Wesentlichen aus zwei aneinander zentrierten Formhälften (141) und zwei Schiebern (143, 145). Die Stirnseiten der Schieber (143, 145) kontaktieren sich in einer Trennfuge (146).

Die Trennebene (142) der Formhälften (141) liegt in der in Figur 6 dargestellten Zeichnungsebene. Die durch die beiden Formhälften (141) entstehende außenliegende Nahtspur (82) bzw. der entsprechende Grat ist in Figur 5 als Linienzug zu erkennen.

Die Spritzgießform (140) gibt dem Suprastrukturträger (20) oberhalb des Implantattellers (31) bzw. der Randoberseite (37) in der Regel seine endgültige Form. Demnach werden die Rillen (44, 45) oder Vertiefungen (46, 47) auch mittels der Struktur der Spritzgießform (140) bzw. der Formhälften (141) erzeugt. Eine andere Alternative zur Erzeugung einer Struktur der beschriebenen Größenordnung besteht darin, zumindest im Bereich oberhalb des Implantattellers (31) die Korngröße des Pulvers auf z.B. 10 bis 50 $\mu$m zu vergrößern. In der Folge ergeben sich auch bei einer glattwandigen Spritzgießform (140) - bedingt durch eine mittlere Korngröße - stochastisch verteilte Vertiefungen, deren Tiefen 10 bis 30 $\mu$m erzielen können.

Ggf. kann am Suprastrukturträger (20) im Bereich seiner Randoberseite (37) bzw. im Bereich der Hauptauflagefläche (25) oder dessen Nahbereich eine zapfenartige Verlängerung angeformt sein, um das Bauteil vor der Bearbeitung durch den Zahntechniker leichter handhaben zu können.

Unterhalb der Randoberseite (37) erhält der Suprastrukturträger (20) eine Vorform, die zu einem späteren Zeitpunkt z.B. spanabhebend nachbearbeitet wird. Zu dieser Nachbearbeitung gehören u.a. die Unterseite (32) des Implantattellers (31), der Implantatkonus (53), der Außensechskant(54) und der Zylinderansatz (55).

Der obere Schieber (143) gibt der oberen Zone (67) der Ausnehmung (61) ihre Endform, während in der mittleren Zone (64) durch ihn nur ein Rohzapfen (81) als Vorform entsteht. Die mittlere Zone (64) weist einen verkleinerten Innenkonus (83) und einen verkürzten Abwinkelungsbereich (84) auf. Der Innenkonus (83) und der Abwinkelungsbereich (84) erhalten erst durch Feinbearbeiten, z.B. Feindrehen, ihre in Figur 2 dargestellte Form. Der Drehmeißel wird dazu über die untere Zone (62) eingeführt, die mittels des unteren Schiebers (145) geformt wird. Beim Feindrehen wird ggf. auch die zylindrische Bohrung (62) auf ihr Fertigmaß ausgedreht.

Die Außensechskantschraube (90) ist in drei Bereiche, einen Kopfbereich (91), einen Schaftbereich (96) und einen Gewindebereich (97) aufgeteilt, vgl. Figuren 1 und 2. Der erste Bereich ist der Kopfbereich (91). Er besteht aus einem konusförmigen Kopf (92) und einer darauf angeordneten Werkzeugmitnahme (94). Der z.B. 1,28 mm hohe Kopf (92) hat die Form eines sich in Richtung Gewindebereich (97) verjüngenden Kegelstumpfes, der z.B. einen Kegelwinkel von 30 Winkelgraden aufweist. Der konusförmige Bereich, mit dem die Schraube (90) am Suprastrukturträger (20) anliegt, hat eine Länge von z.B. 1,09 mm. Sein größter Durchmesser misst 2,2 mm.

Die Werkzeugaufnahme (94) ist ein Außensechskant, auf dem beim Festziehen der Schraube (90) ein Rohrschlüssel mit Innensechskant aufgesetzt wird. Der Außensechskant verjüngt sich zumindest in den letzten beiden Dritteln seiner Länge zum freien Kopfende hin. Der Außensechskant hat eine maximale Schlüsselweite von 1,42 mm. Der Bereich dieser maximalen Breite liegt z.B. 0,29 mm oberhalb der oberen Kopfstirnfläche (93). Der Krümmungsradius der Sechskantflanken (95) beträgt z.B. 2,36 mm.

An den konusförmigen Bereich des Kopfes (92) schließt sich beispielsweise tangential der zweite Bereich, der Schaftbereich (96) an. Der Schaftbereich (96) besteht aus einer rotationssymmetrischen Taille, die im Schraubenmittenbereich, z.B. 3,8 mm vom freien Ende des Kopfbereiches (91) entfernt, ihren kleinsten Durchmesser, z.B. 1,28 mm, hat. Die mittlere Krümmung der Außenkontur der Taille hat im Schnitt nach Figur 2 einen Radius von 5,2 mm.

Der dritte Bereich ist der Gewindebereich (97). Er weist ein M1,6-Gewinde auf, dessen nutzbare Länge z.B. 1,5 mm beträgt.

Auf den Suprastrukturträger (20) wird im Ausführungsbeispiel ein Klebekörper (100) aufgeklebt oder aufzementiert. Der Klebekörper (100) ist ein Hohlkörper, der innerhalb der Zahnprothese zwischen dem Suprastrukturträger (20) und der künstlichen Zahnkrone (120) angeordnet ist. Mit seiner Hilfe wird u.a. die Winkellage der Zahnkrone (120) an die Winkellage des Implantatpfostens (23) angeglichen.

Der Klebekörper (100) hat im Wesentlichen eine topfförmige Gestalt. Seine Innenwandung (105) ist an die Außenwandung (26) des Implantatpfostens (23), einschließlich der Randoberseite (37), angepasst. Das Spiel beträgt z.B. 30 bis 50 μm, so dass der Klebekörper (100) unter Zwischenlage eines Klebstoffes (113) auf dem Implantatpfosten (23) des Suprastrukturträgers (20) großflächig aufliegt. Durch die obere Struktur (41) des Implantatpfostens (23) haftet der Klebstoff (113) auch formschlüssig an diesem.

Der Klebekörper (100) hat einen verbreiterten Rand (107), mit dem er sich einerseits an der Randoberseite (37) des Suprastrukturträgers (20) abstützt und andererseits selbst für die Krone eine zumindest bereichsweise axiale Abstützung bietet.

Im Bereich seiner Oberseite (102) weist er eine Ausnehmung (106) auf, die bei montierter Prothese eine Verlängerung der Bohrung (67) des Implantatpfostens (23) darstellt.

Nach dem Ausführungsbeispiel sitzt hier die Zahnkrone (120) auf einem Klebekörper (100). Demnach ist die Innenwandung (125) der Zahnkrone (120) an die Außenwandung (101) des Klebekörpers (100) angepasst. Auch hier liegt das sich zwischen der Außenwandung (101) und Innenwandung (125) befindende Spiel bei 30 bis 50 μm. Der Klebekörper (100) und die Zahnkrone (120) sind im Bereich des Randes (132) ihrer Klebefuge (131) so gestaltet, dass die letzten zehntel Millimeter in einem Winkel von 90 ± 10 Winkelgrade auf die gemeinsame Prothesenaußenfläche (2) treffen. Im Bereich des Randes ihrer Klebefuge (131) gehen die Außenfläche (121) der Zahnkrone (120) und die Außenfläche (101) des Klebekörpers (100) tangential oder zumindest fast tangential ineinander über. Sollte dort ein Knick vorgesehen sein, so liegt sein eingeschlossener Winkel in einem Bereich, der kleiner als 180 und größer als 175 Winkelgrade ist.

Nach Figur 2 sitzt bei der fertigen Prothese der Suprastrukturträger (20) mittels eines Implantatkonus (53) verdrehsicher und verschraubt im Konussitz (14) des Implantatkörpers (10). Der Implantathals (52) und die Unterseite (32) des Implantattellers (31) liegen am Zahnfleisch (4) an. Die für Keime eine Barriere bildende Struktur (71) der Unterseite (32) reduziert oder verhindert die Bakterienbesiedelung im Spaltraum zwischen dem Implantatteller (31) und dem Zahnfleisch (4). Zudem erleichtert die Struktur (71) das Anhaften der Bindegewebsfasern des Zahnfleisches (4) am Suprastrukturträger (20) unterhalb des Implantattellers (31).

Auf dem Implantatteller (31) sitzt hier verklebt die Kombination aus dem Klebekörper (100) und der künstlichen Zahnkrone (120). Auf der bukkalen bzw. äußeren Zahnseite liegen die Klebefugen (111) und (131) geschützt unter dem oberen Zahnfleischrand (5). Auf der lingualen bzw. inneren Zahnseite ist zumindest die Klebefuge (111) vom Zahnfleisch (4) verdeckt.

Bezugszeichenliste:

1　Zahnersatz, prothetisch
2　Prothesenaußenfläche
3　Kieferknochen
4　Zahnfleisch, Schleimhaut
5　Zahnfleischrand, zahnseitig

| 6 | Kauebene |
| 8 | Zement, Klebstoff |
| 10 | Implantatkörper |
| 11 | Außengewinde |
| 12 | Implantatschulter |
| 13 | Ausnehmung, gestuft |
| 14 | Innenkonus, erste Zone, Konus, Konussitz |
| 15 | Innensechskant, zweite Zone |
| 16 | Zylindersitz |
| 17 | Gewindebohrung, dritte Zone |
| 18 | Implantatneigungswinkel |
| 19 | Mittellinie |
| 20 | Suprastrukturträger, Fertigform, Teil eines Hybridabutments |
| 21 | Bereich, der Zahnkrone zugewandt |
| 23 | Implantatpfosten |
| 24 | Oberseite |
| 25 | Hauptauflagefläche |
| 26 | Außenfläche, radial; Außenwandung |
| 27 | Flankenlinien, links |
| 28 | Flankenlinien, rechts |
| 29 | Mittellinie |
| 31 | Implantatteller |
| 32 | Unterseite, dem Zahnfleisch zugewandte Fläche |
| 33 | Rand |
| 34 | Übergangsbereich, Ausrundung |
| 35 | Rinne |
| 37 | Randoberseite, flächig |
| 38 | Höhenversatz |
| 41 | Struktur, Rillenstruktur |
| 42 | oberer Bereich |
| 43 | unterer Bereich |
| 44 | Rillen |
| 45 | Rillen von (43) |
| 46 | Vertiefungen mit fast kreisrunder Kante |
| 47 | Vertiefungen mit fast elliptischer Kante |
| 48 | Mittelpunktsbahn zu (46), Spur |
| 49 | Mittelpunktsbahn zu (47), Spur |
| 51 | Bereich, dem Implantatkörper zugewandt |
| 52 | Implantathals |
| 53 | Implantatkonus, Außenkonus |
| 54 | Verdrehsicherung, Außensechskant |
| 55 | Zylinderansatz |
| 59 | Normale zu den Ebenen der Rillen (45) |
| 61 | Ausnehmung, geknickt, Schraubeneinführausnehmung |
| 62 | untere Zone; Bohrung, zylindr. ;Schraubensitzbohrung |
| 63 | Mittellinie von (62) |
| 64 | mittlere Zone |
| 65 | Innenkonus |
| 66 | Abwinkelungsbereich |
| 67 | obere Zone; Bohrung, zylindrisch |
| 69 | Mittellinie von (67) |
| 71 | Struktur, Mikrostruktur, Rillenstruktur |
| 74 | Rillen |
| 80 | Rohling des Suprastrukturträgers |
| 81 | Rohzapfen, Vorform |
| 82 | Nahtspur |
| 83 | Innenkonus, verkleinert |
| 84 | Abwinkelungsbereich, unbearbeitet |
| 90 | Außensechskantschraube, Schraube |
| 91 | Kopfbereich |
| 92 | Kopf, konusförmig |
| 93 | Kopfstirnfläche |
| 94 | Werkzeugaufnahme, Außensechskant |
| 95 | Sechskantflanken |
| 96 | Schaftbereich, Taille, Schaft |
| 97 | Gewindebereich, Gewinde |
| 100 | Klebekörper, Teil eines Hybridabutments |
| 101 | Außenwandung, Außenfläche |
| 102 | Oberseite |
| 105 | Innenwandung, Innenfläche |
| 106 | Ausnehmung |
| 107 | Rand |
| 111 | Klebefuge zwischen (23) und (100) |
| 113 | Klebstoff |
| 120 | Zahnkrone, künstlich, Suprakonstruktion |
| 121 | Außenwandung, Außenfläche |
| 125 | Innenwandung, Innenfläche |
| 131 | Klebefuge zwischen (100) und (120) |
| 132 | Klebefugenrand |
| 133 | Klebstoff |
| 140 | Spritzgießform |
| 141 | Formhälfte, Formteil |
| 142 | Trennebene |
| 143 | Schieber, oben; Pfostenbohrungsschieber |
| 145 | Schieber, unten; Halsbohrungsschieber |
| 146 | Trennfuge zwischen (143) und (145) |
| 147 | Zentrierstifte |
| 150 | Rollwerkzeug |
| 151 | Rollierkopf |
| 153 | Rillenprofilabschnitt |
| 154 | Glättabschnitt |
| 155 | Rollkontaktstelle |
| 157 | Schaft |
| 159 | Mittellinie von (150) |
| 161 | Fräskopf, Schnitt der Hüllfläche des Fräserkopfes |
| 166 | geschlossene Kurve, nahezu Kreise, Rand von (46) |
| 167 | geschlossene Kurve, nahezu Ellipsen, Rand von (47) |

**Patentansprüche**

1. Suprastrukturträger (20), der in einem prothetischen Zahnersatz (1) zwischen einem eine Mittellinie (29) aufweisenden Implantatkörper (10) und einer Suprakonstruktion angeordnet werden kann und auf dem eine künstliche Krone (120) oder ein Verbund aus einem Klebekörper (100) und einer Krone (120) angeordnet werden kann,

    - wobei, dieser (20) in dem klebekörper- und/oder kronentragenden Bereich (21) zumindest bereichsweise eine erste Struktur (41) aufweist und
    - wobei am Suprastrukturträger (20) in dem dem Implantatkörper (10) zugewandten Bereich (51) eine zweite Struktur (71) angeordnet ist und
    - wobei der dem Implantatkörper (10) zugewandte Bereich (51) mindestens einen Implantathals (52) aufweist, und oberhalb des Implantathalses (52) sich ein Implantatteller (31) anschließt, welcher zumindest bereichsweise die zweite Struktur (71) enthält,

wobei der Implantatteller (31) zumindest bereichsweise die Form des Mantels eines Kegelstumpfes hat, dessen Konuswinkel sich zum klebekörper -und/oder kronentragenden Bereich (21) hin öffnet und die Unterseite des Implantattellers aus mehreren auseinander hervorgehenden Kegelkoni besteht, von denen jeder gegenüber der Mittellinie (29) einen anderen Winkel einschließt.

2. Suprastrukturträger nach Anspruch 1, **dadurch gekennzeichnet, dass** dieser (20) in dem klebekörper- und/oder kronentragenden Bereich (21) einen Implantatpfosten (23) und in dem dem Implantatkörper (10) bzw. dem Zahnfleisch (4) zugewandten Bereich (21) einen Implantathals (52) aufweist, wobei im Implantatpfosten (23) eine Schraubeneinführausnehmung (61) angeordnet ist, die mit der im Implantathals (52) positionierten Schraubensitzbohrung (62) einen Winkel von 155 bis 178 Winkelgraden einschließt.

3. Suprastrukturträger nach Anspruch 1, **dadurch gekennzeichnet, dass** in dem dem Implantatkörper (10) zugewandten Bereich (51) als Struktur (71) ganz oder teilweise umlaufende Stollen, Stege, Rillen (74) oder Kerben angeordnet sind.

4. Suprastrukturträger nach Anspruch 3, **dadurch gekennzeichnet, dass** die umlaufenden Stollen oder Stege sowie die Rillen (74) oder Kerben eine Teilung haben, die größer als 80 μm und kleiner als 250 μm ist.

5. Suprastrukturträger nach Anspruch 3, **dadurch ge-** kennzeichnet, dass die Oberfläche - unabhängig von den umlaufenden Stollen, Stege, Rillen (74) oder Kerben - einen arithmetischen Mittenrauwert hat, der größer als 1 μm und kleiner als 2,5 μm ist.

6. Verfahren zur Herstellung eines Suprastrukturträgers (20) nach Anspruch 1, der in einem prothetischen Zahnersatzes (1) zwischen einem Implantatkörper (10) und einer Suprastruktur (100, 120), angeordnet werden kann, wobei der Suprastrukturträger (20) in einem klebekörper- und/oder kronentragenden Bereich (21) einen Implantatpfosten (23) und in dem dem Zahnfleisch (4) und dem Implantatkörper (10) zugewandten Bereich (51) mindestens einen Implantathals (52) aufweist, **dadurch gekennzeichnet,**

    - **dass** der Suprastrukturträger (20) aus einem Rohling (80) gefertigt wird, der mittels eines Pulverspritzgießverfahrens hergestellt wird,
    - **dass** der Rohling (80) im klebekörper- und/oder kronentragenden Bereich (21) durch die Spritzgießform (140) eine der Fertigform (20) mathematisch ähnliche Form erhält,
    - **dass** der Rohling (80) in dem dem Zahnfleisch (4) und dem Implantatkörper (10) zugewandten Bereich (51) durch die Spritzgießform (140) die Form eines Rohzapfens (81) erhält,
    - **dass** der Rohzapfen (81) durch spanabhebende und/oder umformende oder durch mechanisch und optisch trennende Bearbeitung seine Fertigform (20) erhält, wobei ein dem Zahnfleisch (4) zugewandter Implantatteller (31) entsteht, in dessen dem Zahnfleisch (4) zugewandten Fläche (32) zumindest bereichsweise eine Struktur (71) eingearbeitet wird.

7. Verfahren nach Anspruch 6, **dadurch gekennzeichnet, dass** das Pulverspritzgießverfahren als Ausgangsmaterial ein Metall- oder Keramikpulver verwendet, wobei das Metallpulver auf einer Titan-Aluminium-Legierung basiert.

**Claims**

1. A suprastructure carrier (20) adapted to be arranged inside a dental prosthesis (1) between an implant body (10) and a supraconstruct, said body (10) having a center line (29), and said carrier adapted to have placed thereon an artificial crown (120) or a combination of an adhesive body (100) and a crown (120),

    - the carrier (20) comprising a first structure (41) at least in portions of a section (21) carrying an adhesive body and/or a crown;
    - said suprastructure carrier (20) having thereon a second structure (71) in the portion (51) facing the implant body (10); and
- with the section (51) facing the implant body (10) comprising at least one implant neck (52), said implant neck (52) merging at the top thereof with an implant flange (31) which has said second structure (71) thereon at least in portions thereof, said implant flange (31) having at least in portions thereof the shape of an envelope of a frustrum of a cone of which the conical angle opens towards the region (21) carrying the adhesive body and/or the crown, with the bottom surface of the implant flange consisting of multiple cones each emerging from another and including different angles to the center line (29).

2. Suprastructure carrier as claimed in claim 1, **characterized by** comprising an implant shank (23) in the region (21) carrying the adhesive body and/or the crown and an implant neck (52) in the region facing the implant body (10) or the gingiva (4), respectively, said implant shank (23) having herein a screw introduction recess (61) at an included angle of 155 to 178 degrees to the screw seat bore (62) provided inside the implant neck (52).

3. Suprastructure carrier as claimed in claim 1, **characterized in that** the region (51) facing the implantbody (10) has therein as forming the structure (71) studs, webs, grooves (74) or notches encircling said region.

4. Suprastructure carrier as claimed in claim 3, **characterized by** said encircling studs or webs and the grooves (74) or notches having a pitch greater than 80 $\mu$m and smaller than 250 $\mu$m.

5. Suprastructure carrier as claimed in claim 3, **characterized by** the surface having an arithmetic mean roughness value greater than 1 $\mu$m and smaller than 2.5 $\mu$m regardless of the encircling studs, webs, grooves (74) or notches.

6. A method of making a suprastructure carrier (20) as claimed in claims 1 and adapted to be arranged in a dental prothesis (1) between an implant body (10) and a suprastructure (100, 120) said suprastructure carrier (20) having an implant shank (23) in a region (21) carrying an adhesive body and/or a crown and at least one implant neck (52) in the region (51) facing the gingiva (4) and the implant body (10), **characterized by**

- manufacturing the suprastructure carrier (20) from a blank (80) made by a powder injection moulding method;
- providing the blank (80) with a shape mathematically similar to the finished shape (20) in the region (21) supporting the adhesive body and/or the crown, such providing being by means of the injection mould (140);
- providing the blank (80) with a portion shaped like a raw peg (81) by means of said injection mould (140) in the region facing the gingiva (4) and the implant body (10); and
- giving the raw peg (81) its finished shape (20) by cutting and/or reshaping or by mechanical and optical separating treatment, causing an implant flange (31) facing the gingiva (4) to be formed, said flange having a structure (71) worked into its surface (32) facing the gingiva (4).

7. Method as claimed in claim 6, **characterized by** the starting material used in the powder injection moulding process comprising a metal powder or a ceramic powder, said metal power being titanium-aluminium alloy-based.

## Revendications

1. Support de suprastructure (20) qui peut être placée dans une prothèse dentaire, entre un corps d'implant (10) présentant une ligne médiane (29) et une supraconstruction, et sur lequel peuvent être disposés une couronne artificielle (120) ou un ensemble composé d'un corps adhésif (100) et d'une couronne (120),

- ce support (20) présentant dans la zone (21) porteuse d'un corps adhésif et/ou d'une couronne, au moins par endroits, une première structure (41) et
- une deuxième structure (71) étant disposée sur le support de suprastructure (20), dans la zone (51) tournée vers le corps d'implant (10) et
- la zone (51) tournée vers le corps d'implant (10) présentant au moins un col d'implant (52) et au-dessus du col d'implant (52) se raccordant une plaque d'implant (31) qui contient au moins par endroits la deuxième structure (71),

la plaque d'implant (31) ayant au moins par endroits la forme d'une enveloppe d'un tronc de cône dont l'angle de cône s'ouvre vers la zone porteuse du corps adhésif et/ou de la couronne (21) et la partie inférieure de la plaque d'implant étant composée de plusieurs cônes tronqués découlant les uns des autres dont chacun forme un angle différent avec la ligne médiane (29).

2. Support de suprastructure selon la revendication 1, **caractérisé en ce que** ce support (20) comporte un pilier d'implant (23) dans la zone (21) porteuse d'un corps adhésif et/ou d'une couronne et comporte un col d'implant (52) dans la zone (51) tournée vers le corps d'implant (10) ou la gencive (4), un évidement pour l'insertion d'une vis (61), qui forme un angle de 155 à 178 degrés avec l'alésage du siège de la vis (62) positionné dans le col de l'implant (52), étant agencé dans le pilier d'implant (23).

3. Support de suprastructure selon la revendication 1, **caractérisé en ce que** des barrettes, nervures, rainures (74) ou encoches (74) sont disposées comme structure (71) de façon entièrement ou partiellement périphérique dans la zone (51) tournée vers le corps d'implant (10).

4. Support de suprastructure selon la revendication 3, **caractérisé en ce que** les barrettes ou nervures périphériques ainsi que les rainures (74) ou encoches ont une division supérieure à 80 $\mu$m et inférieure à 250 $\mu$m.

5. Support de suprastructure selon la revendication 3, **caractérisé en ce que** la surface, indépendamment des barrettes, nervures, rainures (74) ou encoches périphériques, a une rugosité moyenne arithmétique supérieure à 1 $\mu$m et inférieure à 2,5 $\mu$m.

6. Procédé pour la réalisation d'un support de suprastructure (20) selon la revendication 1 qui peut être placé dans une prothèse dentaire (1), entre un corps d'implant (10) et une suprastructure (100, 120), le support de suprastructure (20) comportant un pilier d'implant (23) dans une zone (21) porteuse d'un corps adhésif et/ou d'une couronne et comportant au moins un col d'implant (52) dans la zone (51) tournée vers la gencive (4) et le corps d'implant (10), **caractérisé en ce**

     - **que** le support de suprastructure (20) est fabriqué à partir d'une ébauche (80) réalisée à l'aide d'un procédé de moulage par injection de poudre,
     - **que** l'ébauche (80) reçoit une forme mathématiquement semblable à la forme finale dans la zone (21) porteuse d'un corps adhésif et/ou d'une couronne à l'aide du moule d'injection (140),
     - **que** l'ébauche (80) reçoit la forme d'un tenon brut (81) dans la zone (51) tournée vers la gencive (4) et le corps d'implant (10) à l'aide du moule d'injection (140),
     - **que** le tenon brut (81) reçoit sa forme finale (20) par un procédé de coupe et/ou de formage ou par un procédé de séparation mécanique et optique au cours duquel se forme une plaque d'implant (31) tournée vers la gencive (4), comportant une structure incorporée au moins par endroits dans la surface (32) tournée vers la gencive (4).

7. Procédé selon la revendication 6, **caractérisé en ce que** le procédé de moulage par injection de poudre utilise comme matière de départ une poudre métallique ou céramique, la poudre métallique étant à base d'un alliage titane-aluminium.

**Fig. 1**

# Fig. 2

**Fig. 3**

**Fig. 4**

# Fig. 5

# Fig. 6

**Fig. 7**

46  166  48

**Fig. 9**

26  47  167  49

**Fig. 8**

161  46  48  26

23

**Fig. 10**

161  47  49  167

23

**Fig. 11**

151

154  153  154  31

**Fig. 12**

151

153  154

151

155  150  157  159  **Fig. 13**

**EP 3 021 783 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202012102746 U1
- EP 2228032 A1
- US 2002016813 A1